# EUROPEAN PATENT SPECIFICATION

(11) **EP 4 667 181 B1**
(45) Date of publication and mention of the grant of the patent: **05.08.2026**
(21) Application number: 25178903.8
(22) Date of filing: 27.05.2025
(51) Int. Cl.: B29C 33/56, B29C 70/38, B29C 33/42

(54) **METHOD AND TOOLING FOR A THERMOPLASTIC COMPOSITE FIBER LAYUP**
VERFAHREN UND WERKZEUG FÜR EINE THERMOPLASTISCHE VERBUNDFASERLAMINIERUNG
PROCÉDÉ ET OUTILLAGE POUR L'APPLICATION DE FIBRES COMPOSITES THERMOPLASTIQUES

(30) Priority: 21.06.2024 FR 2406735
(43) Date of publication of application: 24.12.2025
(73) Proprietor: Daher Aerospace, 94390 Orly (FR)
(72) Inventor: LEMOINE, Ivain, 44330 VALLET (FR)
(74) Representative: Hamann, Jean-Christophe

(56) References cited:
- US-A1- 2014 110 633
- "Roughness and the right blasting media: advice and knowledge", 4 August 2021 (2021-08-04), XP002812786, Retrieved from the Internet <URL:https://web.archive.org/web/20210804071819/https://straaltechniek.net/en/shot-peening-and-blasting-knowledge/roughness-and-the-right-blasting-media-advice-and-knowledge/> [retrieved on 20241218]

## Description

### Technical field

The invention belongs to the field of the manufacturing of composite materials with a thermoplastic polymer matrix.

More particularly, the method is about the layup of thermoplastic prepreg plies, by tape laying or automatic fibers placement, and more particularly for the preparation of a surface of a tooling implemented in such an operation.

### Background art

Fiber layup is an operation where a composite preform comprising a lamination of plies, deposited on a tooling comprising a laying up surface reproducing a shape of the preform. The preform may undergo further operations, like consolidation and machining, in order to make a finished part.

Plies are prepregs comprising fibers and a polymer making the matrix of the composite material.

The preform thus obtained is then cured or consolidated by subjecting it to a pressure and temperature cycle so as to confer it a finished part shape and characteristics.

Unlike prepregs comprising a thermosetting polymer, prepregs comprising a thermoplastic polymer do not exhibit tackiness at room temperature.

The adhesion of a new ply on a previously deposited lamination is obtained by locally heating at a temperature high enough, a deposition area, comprising both, the deposited ply and at least an exposed surface of the underlying lamination, while applying a pressure on the deposition area, to achieve the adhesion of the new ply on the laid up preform.

Document EP 4 349 576 A1 describes such a localized heating process by means of a laser beam for a thermoplastic prepreg layup operation.

Throughout the text, "fiber layup" means the deposition of a prepreg in the form of tapes, rovings or tows, the latter variants being commonly referred to as Automatic Fiber Placement, or by the AFP acronym. These deposition methods are known from prior art.

Thus, during the fiber layup of a thermoplastic prepreg, the adhesion of the ply deposited on the preform being laid up, requires the presence of an underlying thermoplastic polymer contained in the previously deposited plies.

When depositing the first ply on a tooling that is made of a material such as a metal or a ceramic, which does not allow chemical bonding with the polymer of the prepreg, there is an issue for making the first ply adhering to the tooling deposition surface and for the lamination to be stable during the layup operation.

This issue is even more saliant when the layup is carried out at high speed such as described, for example, in document U.S. Pat. No. 10,773,470 without melting the polymer of the prepreg.

If the deposition conditions are such that the first ply adheres to the surface of the tooling, then there is still a remaining issue of unmolding the preform at the end of the layup operation.

Such technical difficulty is currently solved by wrapping the tooling surface with a high-temperature resistant polyimide film, commonly referred to as thermalimide. Such a thermalimide film is bonded to the tooling by adhesive tapes and allows sufficient adhesion of the first ply to the film, while enabling the preform to be unmolded, as the thermalimide film remains bonded to the preform. The thermalimide film may then be torn off from the preform without damaging the preform.

Therefore, before each new layup operation, the tooling must be covered with a new thermalimide film.

Such a thermalimide film is quite stiff, so that, when the tooling is of a complex shape, like a non-developable shape or comprising joggles and other local shape variations, the covering of the surface of the tooling is made with small portions of thermalimide film, individually bonded with an adhesive tape, according to a "scrapbooking" method, so as to avoid the formation of wrinkles or creases in the film, which would be reproduced on the preform and would lead, in particular, to local corrugations of fibers, potentially affecting the mechanical characteristics of the finished part.

This manual operation is painstaking, time-consuming and, associated with the cost of the not reusable thermalimide film, affects the cost of parts and the overall productivity of the fiber layup operation.

Document US2014110633A1 discloses a method for holding a first ply upon a fiber layup operation of a thermoplastic prepreg. To this end, a releasably adhered surface layer polymer coating is applied to a deposition surface of a tooling where this coating film remains bonded to the preform upon unmolding, being easily torn off the preform, the coating film being thus removed from the deposition surface, such coating has thus to be renewed before each fiber layup operation.

### Summary of the invention

The shortcomings of the prior art may be solved by a method for making a first composite preform comprising a thermoplastic polymer matrix consisting of a first polymer, by fiber layup on a deposition surface of a tooling configured for laying up a prepreg comprising the first polymer, the method comprising the steps of:
preparing the deposition surface to obtain a roughness Ra of the deposition surface greater than or equal to 6.3 micrometers;
covering at least part of the deposition surface, by a polymer film made of a second polymer, consolidated on the at least part of the deposition surface so that the polymer film adheres at all points to the at least part of the deposition surface, a melting temperature of the second polymer being equal to or greater than a melting temperature of the first polymer;
depositing a prepreg layup comprising a first ply deposited on the polymer film at a deposition temperature less than or equal to the melting temperature of the second polymer; and
unmolding the first composite preform by separating it from the polymer film;
wherein the polymer film remains bonded to the deposition surface during the unmolding step.

Thus, the polymer film adheres strongly to the deposition surface because of the surface preparation and enables the first ply to be held during a subsequent fiber layup operation.

The method may be implemented according to the embodiments and variants exposed hereafter, which are to be considered individually or according to any technically operative combination.

After the step of unmolding the first preform, a second composite preform may be made by fiber layup on the tooling comprising the same polymer film.

The first polymer and the second polymer may be the same polymers.

The first polymer and the second polymer may be of the polyaryletherketone family.

The second polymer may be a thermoplastic polyimide

The step of preparing the deposition surface may comprise sandblasting the deposition surface.

The step of preparing the deposition surface may comprise texturing the deposition surface by a method selected among laser engraving, chemical etching and electrochemical machining.

A strip with a width comprised between 1 mm and 10 mm from at least one edge of the deposition surface may differ from the remaining of the deposition surface by a surface of the strip selected among: not covered by the second polymer and covered with a high temperature resisting adhesive tape.

The method may be implemented with a tooling for the fiber layup of a thermoplastic matrix composite preform, the tooling comprising a deposition surface having a roughness Ra of at least 6.3 micrometers and in which at least part of the deposition surface is covered by a thin layer made of a thermoplastic polymer, with a thickness comprised between 120 micrometers and 400 micrometers, adhering to all points to the at least part of the deposition surface wherein a strip with a width comprised between 1 mm and 10 mm from at least one edge of the deposition surface, differs from the remaining of the deposition surface by a surface of the strip selected from: not covered by the thin polymer layer and covered with a high temperature resistant adhesive tape.

The tooling may comprise an integrated heating device of the deposition surface.

### Brief description of the drawings

The method may be implemented according to the nonlimiting embodiments exposed hereafter with reference to FIG. 1 to FIG. 4 wherein:
FIG. 1 shows in a perspective and exploded view an exemplary embodiment of a tooling for implementing the method;
FIG. 2 shows in a perspective view, an example of a composite preform obtained using the tooling shown in FIG. 1;
FIG. 3 shows in a perspective view the tooling of FIG. 1 covered with a thin layer of polymer on a part of its deposition surface; and
FIG. 4 is a flowchart of the method.

### Description of embodiments

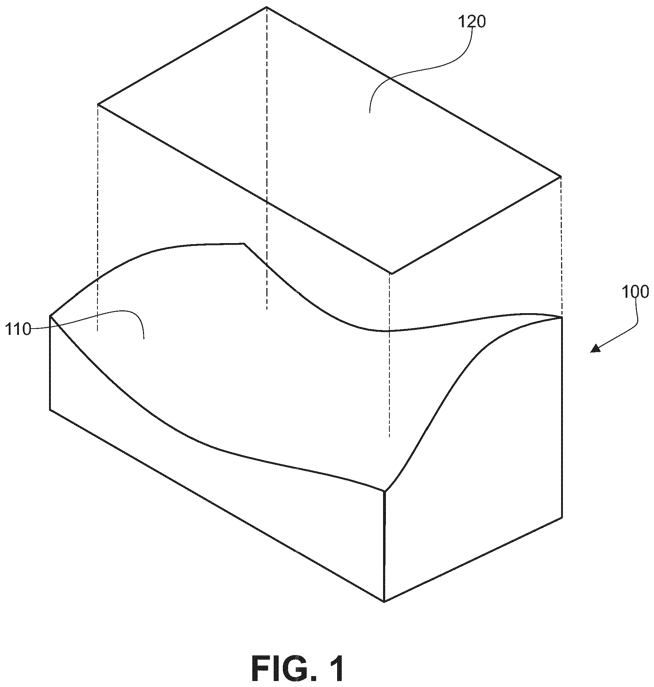

FIG. 1, according to some embodiment a tooling (100) for fiber layup comprises a deposition surface (110) of a complex shape like a non-developable shape or comprising localized shape changes such as a joggle (not shown).

Such tooling is commonly manufactured by machining a tool steel, which may be a low coefficient of thermal expansion steel of the INVAR^{®} type.

However, the method may implement a tooling made of a different material, in particular, an aluminum alloy, a copper alloy or a ceramic.

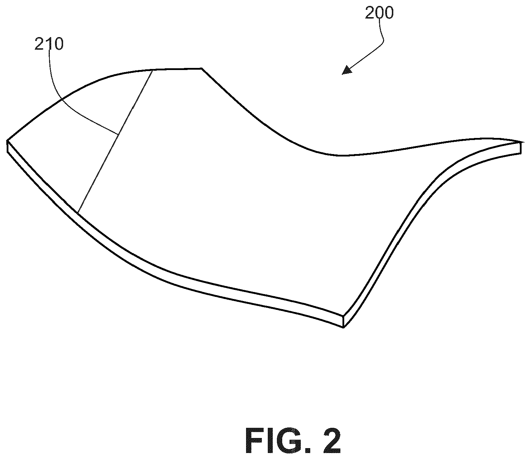

FIG. 2 this tooling is configured to layup on it a composite preform (200) comprising continuous fibers (210), i.e. fibers extending continuously from one edge to another of the preform, in thermoplastic polymer matrix.

As non-limiting examples, fibers may be fibers of carbon, aramid, glass or combination thereof, the thermoplastic polymer may be of the polyaryletherketone family (PAEK) such as PEEK (polyethetherketone), PEK (polyetherketone), PEKK (polyetherketoneketone), LMPAEK^{®} (a polyaryletherketone copolymer with a low melting point), or polyphenylene sulfide (PPS) for aeronautical applications, though the method may also be adapted to the implementation of other types of fibers and thermoplastic polymers.

The finished part is obtained from a composite preform (200) comprising a lamination of composite plies, the fibers being oriented differently according to the ply position in the lamination.

The composite preform (200) is thus obtained by a first fiber layup operation, in particular by automatic fibers placement (AFP).

This first fiber layup operation may be carried out without direct consolidation upon deposition, where the fiber tows are deposited at a high deposition speed.

According to this example, the deposited fibers adhere to a ply that was previously deposited by a combined action of a localized heating and a pressure application in the deposition area.

Still according to this non-limiting exemplary embodiment, the control of the deposition speed and the control of the heating conditions at the deposition area makes it possible to obtain, at the end of the fiber lay up operation, a preform (200) that is rigid but not fully consolidated, meaning that the plies are firmly bonded to each other but without the molecular chains of the thermoplastic polymer making the matrix extending through multiple plies in the stacking direction.

Therefore, according to this embodiment, the composite preform (200) undergoes an additional step of consolidation, consisting in subjecting the composite preform to a pressure-temperature cycle, for example by heating the composite preform beyond the melting temperature of the first thermoplastic polymer making the polymer matrix of the composite preform, in a tooling where the composite preform is comprised in a vacuum evacuated sealed cavity reproducing a shape of the finished part.

After this consolidation step, the finished part takes its final raw shape and thickness and may be further machined to make holes, cuts and other thickness adjustments.

The method comprises a pre-configuration of the tooling that is particularly adapted for the implementation of a manufacturing process as described above but may also be applicable to a fiber layup process implementing a full consolidation upon deposition, wherein a combination of a reduced deposition rate and the conditions of application of the fibers upon deposition (pressure, temperature) enable the consolidation of the plies, the elimination of porosities and the development of the molecular chains of the polymer matrix through the stack of plies.

Returning to FIG. 1, the pre-configuration of the tooling aims to create a deposition surface (110) enabling the first ply deposited on this surface to be firmly held on the deposition surface, while ensuring the ability to separate the preform from the tooling after the completion of the layup operation, without damaging either the composite preform nor the tooling.

To this end, a surface preparation is applied to the deposition surface (110) and following this surface preparation, a film (120) made of a second thermoplastic polymer is applied to the deposition surface thus prepared.

The surface preparation aims to reinforce the adhesion of the film (120) to the deposition surface (110) so that, when unmolding the preform from the tooling, the film (120) remains bonded to the deposition surface (110).

For example, the preparation of the deposition surface (110) may be carried out by sandblasting to obtain a roughness Ra of the order or slightly greater than 6.3 micrometers.

Ra is defined by the ISO standard number 4287:1997 as the average roughness and measures the deviation of a surface from a mean height.

Sandblasting produces a surface whose roughness is called ergodic, resulting in stochastic profile height deviations.

A similar result of strengthening the bonding of the film to the deposition surface may be obtained by texturing the deposition surface according to defined patterns, in particular by laser engraving, chemical, photochemical or electrochemical etching, electro discharge machining or even directly during cutting tool machining of the deposition surface. In such a case the measured roughness depends on the texture, especially in the case of laser engraving which makes it possible to achieve complex patterns such as "holding pits" or a superposition of a coarse and a finer pattern, so that the appropriate texturing conditions may be determined by tests. Such tests may be conducted economically by fibers layup tests on flat sheets thus prepared.

Several methods of surface preparation may also be combined, for example a combination of sandblasting and laser engraving.

The tooling (100), with the polymer film (120) covering all or part of the deposition surface (110), is bagged in a vacuum tarp, evacuated, and the assembly is heated to a temperature at least equal to a melting temperature of the second thermoplastic polymer making the polymer film (120).

Thus, the polymer film perfectly matches the shape of the deposition surface, including its texture and roughness, strongly adhering at all points to the deposition surface, in the form of a thin polymer layer.

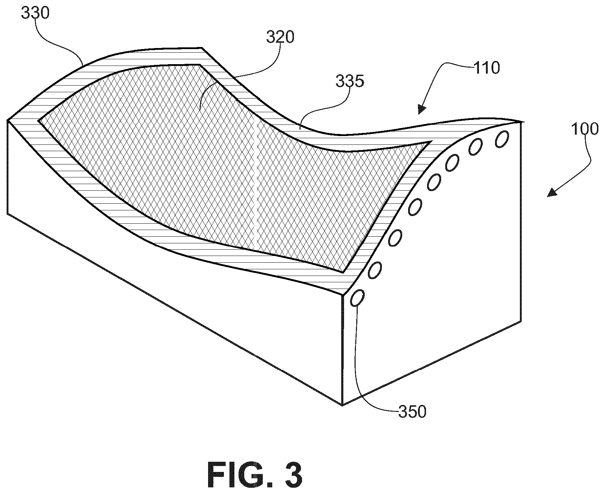

FIG. 3, a thickness of the polymer film (120) is typically comprised between 120 micrometers and 400 micrometers, so that after this heat treatment, a thin layer (320) of thermoplastic polymer, the thickness of which is of the same order of magnitude, covers at least part of the deposition surface (110) and adheres strongly et every point of the at least part of the deposition surface thus prepared.

The machining of the deposition surface prior to the setup of the polymer film (120), may be configured to accommodate this additional thickness of the thin layer (320) on the overall shape, particularly when the fiber layup operation includes a direct consolidation of the laminate.

The thin layer (320) of the second thermoplastic polymer enables to hold a first ply of a thermoplastic prepreg deposited during a subsequent fiber layup operation.

In order for the bonding of the first ply to the thin layer of polymer to be less strong than that of the thin layer of polymer to the deposition surface of the tooling, a melting temperature of the second polymer making the thin layer should be higher than or equal to a melting temperature of the first polymer comprised in the prepreg.

According to some embodiment, the second thermoplastic polymer making the thin layer is selected as the same polymer as the first thermoplastic polymer comprised in the prepreg.

For instance, if the prepreg is a carbon-PEEK, the second polymer is a PEEK (polyethertherketone), if the prepreg is a carbon-PPS, the second polymer is a PPS (polyphenylene sulfide)

In such an example, by a control of the fiber deposition speed, a deposition rate high enough results in that a bonding force of the thin polymer layer (320) to the deposition surface (110) is greater than an adhesion force of the first ply of prepreg to the thin polymer layer (320), enabling the preform to be unmolded and separated for the thin polymer layer, after the fiber layup operation completion, without tearing off the thin polymer layer from the deposition surface (110), thus enabling to immediately reuse the tooling (100) for the layup of another preform, although the first and the second polymer are the same.

According to another embodiment, the second thermoplastic polymer making the thin layer is of the same family as the first polymer comprised in the prepreg but has a higher melting temperature.

For instance, if the prepreg is a carbon-PEEK, the second polymer may be a PEKK. If the prepreg is a carbon-LMPAEK^{®} then the second polymer may be selected from PEEK and PEKK.

In such a configuration, a strong adhesion of the first ply to the thin polymer layer is achieved, including for high-speed deposition conditions, though an adhesion strength of the thin layer to the deposition surface is still greater than the adhesion strength between the thin layer and the first ply, because of the difference in the melting temperatures.

According to these two embodiments, a miscibility of the second polymer making the thin layer with the first polymer comprised in the prepreg, either because they are of the same nature or because they are of the same family, results in that, if a small portion (chip) of the thin layer is torn off the deposition surface (110) during unmolding and adheres to the preform, this chip made of the second polymer will be integrated into the finished part during the subsequent consolidation without damaging the quality of the finished part.

In the case where the fiber layup operation comprises a direct consolidation upon deposition, the second thermoplastic polymer selected to make the thin layer (320) is chosen with a melting temperature significantly higher than that of the first thermoplastic polymer comprised in the prepreg, for example, the second polymer is a thermoplastic polyimide with a high melting temperature, commonly of 405 °C. Such a difference in the melting temperatures between the first and the second polymer, combined with the deposition surface roughness preparation, makes that, during the fiber layup operation, an adhesion of the thin layer (320) to the deposition surface (110) is stronger than an adhesion of the prepreg to the thin layer, more specifically for the first laid up ply, but also avoids a material transfer between the thin layer and the preform, since the thin layer is not being brought to its melting temperature during the fiber layup operation.

Unlike the prior art, where pieces of a polyimide film are used to cover the deposition surface, according to this embodiment, the thin layer (320) of thermoplastic polyimide perfectly matches the deposition surface due to the method implementing the melting and the application of the second thermoplastic polymer on the deposition surface under pressure, combined with the deposition surface roughness, so that the thin layer of thermoplastic polyimide remains bonded to the tooling, the latter being immediately reusable after unmolding the preform. The thin polyimide layer may be applied to the deposition surface in the form of a polyimide film or in the form of a polyimide powder.

The tooling may comprise a heating device configured to heat the deposition surface. Such a heating device may be used during the fiber layup operation.

The heating of the deposition surface may be obtained by resting the tooling (100) on a heating platen during the layup operation, or, the tooling may comprise an autonomous heating device comprising ducts (350) configured for a circulation of a heat transfer fluid, for housing electrical resistances or inductors or any combination of thereof.

By heating the deposition surface, in particular during the deposition of the first ply, to a temperature significantly lower than the melting temperature of the second polymer some control of the adhesion strength of the first ply onto the thin layer may be achieved, both during the fiber layup operation and when unmolding the preform, thus enabling further adjustment possibilities.

At least one strip of the deposition surface, along at least one edge (330), is configured so that the prepreg is not in contact with a surface of the thin polymer layer during the layup operation.

A width of the strip may be comprised between 1 mm and 10 mm depending on the dimensions of the preform, and corresponds to a zone where the tows, rovings or the tapes are cut off during the layup operation. Such a cutting operation as well as potential laser flash phenomena in this area could damage the thin layer.

To this end, according to some embodiment, the thin polymer layer may not entirely cover the deposition surface leaving at least one uncovered border between a perimeter of the thin layer and at least one edge (330) of the deposition surface (110).

According to some other embodiment, the thin layer may cover the entire deposition surface (110) but at least one strip from an edge may be further covered with a high temperature resistant adhesive tape (335), such as a thermalimide adhesive tape.

These two embodiments may be combined, i.e. the thin layer (320) may not cover the entire deposition surface (110) and at least part of the deposition surface that is not covered by the thin layer may be covered with a high-temperature resistant adhesive tape (335).

Whatever the above embodiment, the holding of the first ply by the remainder of the deposition surface, outside of the strip, is enough to stabilize the preform during the layup operation.

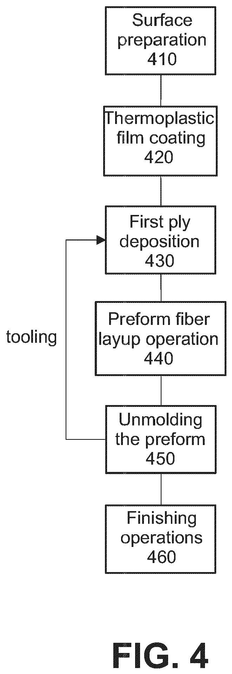

FIG. 4 summarizes the method: in a surface preparation step (410) the deposition surface of a tooling is prepared in order to get a roughness level and/or specific surface etching patterns for providing firm grip to a polymer film applied on at least part of the deposition surface;
In a deposition surface coating step (420) a thin layer of a thermoplastic polymer is melted and consolidated on the deposition surface thus firmly adhering to the deposition surface;
In a starting deposition step (430) a fiber layup operation is started by depositing a first ply on the deposition surface. This first ply adheres to the thin layer of thermoplastic polymer the deposition surface was coated with in the previous step;
The manufacturing of the preform is continued in a further fiber layup operation step (440);
Once the layup of the lamination is completed, the preform is unmolded in a releasing step (450) while the thin thermoplastic layer remains bonded to the deposition surface. When the tooling comprises an integrated heating device, the deposition surface may be heated to a temperature lower than the first polymer melting temperature so as to make unmolding easier;
Once the preform is unmolded it may undergo further operations including consolidation in a finishing step (460), however the tooling may be reused right away to make a new preform starting directly from the fiber layup and first ply deposition steps.

## Claims

1. A method for making a first composite preform comprising a thermoplastic polymer matrix consisting of a first polymer, by fiber layup on a deposition surface of a tooling (100) configured for laying up a prepreg comprising the first polymer, the method comprising steps of:
preparing (410) the deposition surface (110) to obtain a roughness Ra of the deposition surface greater than or equal to 6.3 micrometers;
covering (420) at least part of the deposition surface (110), by a polymer film (120) made of a second polymer, consolidated on the at least part of the deposition surface so that the polymer film (120) adheres at every points of the at least part of the deposition surface, a second polymer melting temperature being equal to or greater than a first polymer melting temperature;
depositing (440) a prepreg layup comprising a first ply deposition (430) on the polymer film (120) at a deposition temperature less than or equal to the second polymer melting temperature; and
unmolding (450) the first composite preform by separating it from the polymer film (120);
wherein the polymer film (120) remains bonded to the deposition surface (110) during unmolding (450).

2. The method of claim 1, comprising, after unmolding (450) the first composite preform, a step of making a second composite preform by fiber layup on the tooling (100) starting directly by depositing (440) a prepreg layup.

3. The method of claim 1, wherein the first polymer and the second polymer are same polymers.

4. The method of claim 1, wherein the first polymer and the second polymer are of a polyaryletherketone family.

5. The method of claim 1, wherein the second polymer is a thermoplastic polyimide.

6. The method of claim 1, wherein preparing the deposition surface (110) comprises sandblasting the deposition surface (110).

7. The method of claim 1, wherein preparing the deposition surface (110) comprises texturing the deposition surface by a surface preparation method selected among laser engraving, chemical etching and electrochemical machining.

8. The method of claim 1, wherein a strip with a width comprised between 1 mm and 10 mm from at least one edge (330) of the deposition surface differs from a remaining of the deposition surface, by a surface of the strip selected among: not covered by the second polymer and a covered with a high temperature resisting adhesive tape.

9. A tooling (100) for a fiber layup of a thermoplastic matrix composite preform (200), the tooling comprising a deposition surface (110) having a roughness Ra of at least 6.3 micrometers and in which at least part of the deposition surface (110) is covered by a thin layer (320) with a thickness comprised between 120 micrometers and 400 micrometers made of a thermoplastic polymer adhering to all points to the at least part of the deposition surface (110) wherein a strip with a width comprised between 1 mm and 10 mm from at least one edge (330) of the deposition surface, differs from a remaining of the deposition surface by a surface of the strip selected from: not covered by the thin layer and covered with a high temperature resistant adhesive tape (335).

10. The tooling of claim 9, comprising an integrated heating device configured for heating the deposition surface.

## Patentansprüche

1. Verfahren zur Herstellung einer ersten Verbundvorform, die eine thermoplastische Polymermatrix aus einem ersten Polymer umfasst, durch Faseraufbringen auf eine Abscheidungsfläche eines Werkzeugs (100), das zum Aufbringen eines Prepregs, das das erste Polymer umfasst, ausgelegt ist, wobei das Verfahren die folgenden Schritte umfasst:
Vorbereiten (410) der Ablagefläche (110), um eine Rauheit Ra der Ablagefläche von größer oder gleich 6,3 Mikrometer zu erzielen;
Abdecken (420) mindestens eines Teils der Ablagefläche (110) mit einer Polymerfolie (120) aus einem zweiten Polymer, die auf dem mindestens einen Teil der Ablagefläche so verfestigt wird, dass die Polymerfolie (120) an allen Punkten des mindestens einen Teils der Ablagefläche haftet, wobei die Schmelztemperatur des zweiten Polymers gleich oder größer als die Schmelztemperatur des ersten Polymers ist;
Aufbringen (440) eines Prepreg-Aufbaus, der eine erste Lagenablage (430) umfasst, auf den Polymerfilm (120) bei einer Ablagetemperatur, die kleiner oder gleich der Schmelztemperatur des zweiten Polymers ist; und
Entformen (450) der ersten Verbundvorform durch Trennen derselben von der Polymerfolie (120);
wobei die Polymerfolie (120) während des Entformens (450) mit der Ablagerungsfläche (110) verbunden bleibt.

2. Verfahren nach Anspruch 1, umfassend nach dem Entformen (450) der ersten Verbundvorform einen Schritt zum Herstellen einer zweiten Verbundvorform durch Faseraufbringen auf die Form (100), beginnend direkt mit dem Aufbringen (440) eines Prepreg-Aufbaus.

3. Verfahren nach Anspruch 1, wobei das erste Polymer und das zweite Polymer identisch sind.

4. Verfahren nach Anspruch 1, wobei das erste Polymer und das zweite Polymer zur Familie der Polyaryletherketone gehören.

5. Verfahren nach Anspruch 1, wobei das zweite Polymer ein thermoplastisches Polyimid ist.

6. Verfahren nach Anspruch 1, wobei das Vorbereiten der Ablagerungsfläche (110) das Sandstrahlen der Ablagerungsfläche (110) umfasst.

7. Verfahren nach Anspruch 1, wobei die Vorbereitung der Abscheidungsfläche (110) das Texturieren der Abscheidungsfläche durch ein Oberflächenvorbereitungsverfahren umfasst, das aus Lasergravur, chemischem Ätzen und elektrochemischer Bearbeitung ausgewählt ist.

8. Verfahren nach Anspruch 1, wobei sich ein Streifen mit einer Breite zwischen 1 mm und 10 mm, der von mindestens einer Kante (330) der Abscheidungsfläche ausgeht, vom Rest der Abscheidungsfläche dadurch unterscheidet, dass die Oberfläche des Streifens entweder nicht mit dem zweiten Polymer bedeckt ist oder mit einem hochtemperaturbeständigen Klebeband bedeckt ist.

9. Ein Werkzeug (100) zum Faserauflegen einer Vorform (200) aus einem Verbundwerkstoff mit thermoplastischer Matrix, wobei die Vorrichtung eine Ablagerungsfläche (110) mit einer Rauheit Ra von mindestens 6,3 Mikrometern umfasst und wobei mindestens ein Teil der Ablagerungsfläche (110) mit einer dünnen Schicht (320) mit einer Dicke zwischen 120 Mikrometern und 400 Mikrometern bedeckt ist, die aus einem thermoplastischen Polymer besteht und an allen Punkten an dem mindestens einen Teil der Ablagerungsfläche haftet (110) an allen Stellen haftet, wobei sich ein Streifen mit einer Breite zwischen 1 mm und 10 mm, der von mindestens einer Kante (330) der Abscheidungsfläche ausgeht, vom Rest der Abscheidungsfläche dadurch unterscheidet, dass die Oberfläche des Streifens entweder nicht von der dünnen Schicht bedeckt ist oder mit einem hochtemperaturbeständigen Klebeband (335) bedeckt ist.

10. Werkzeug nach Anspruch 9, umfassend eine integrierte Heizeinrichtung, die zum Erwärmen der Abscheidungsfläche ausgelegt ist.

## Revendications

1. Procédé pour la fabrication d'une première préforme composite comprenant une matrice polymère thermoplastique constituée d'un premier polymère, par dépôt de fibres sur une surface de dépôt d'un outillage (100) configuré pour le dépôt d'un préimprégné comprenant un premier polymère, le procédé comprenant les étapes de :
préparer (410) la surface de dépôt (110) afin d'obtenir une rugosité Ra de la surface de dépôt supérieure ou égale à 6,3 micromètres ;
recouvrir (420) au moins une partie de la surface de dépôt (110) d'un film polymère (120) constitué d'un deuxième polymère, consolidé sur ladite au moins une partie de la surface de dépôt de telle sorte que le film polymère (120) adhère en tous points de ladite au moins une partie de la surface de dépôt, la température de fusion du deuxième polymère étant égale ou supérieure à la température de fusion du premier polymère ;
déposer (440) une stratification de préimprégnés comprenant un premier pli (430) sur le film polymère (120) à une température de dépôt inférieure ou égale à la température de fusion du deuxième polymère ; et
démouler (450) la première préforme composite en la séparant du film polymère (120) ;
le film polymère (120) restant lié à la surface de dépôt (110) pendant le démoulage (450).

2. Procédé selon la revendication 1, comprenant, après le démoulage (450) de la première préforme composite, une étape de fabrication d'une deuxième préforme composite par empilement de fibres sur l'outillage (100) en commençant directement par le dépôt (440) d'une stratification de préimprégné.

3. Procédé selon la revendication 1, dans lequel le premier polymère et le deuxième polymère sont des polymères identiques.

4. Procédé selon la revendication 1, dans lequel le premier polymère et le deuxième polymère appartiennent à la famille des polyaryléthercétones.

5. Procédé selon la revendication 1, dans lequel le deuxième polymère est un polyimide thermoplastique.

6. Procédé selon la revendication 1, dans lequel la préparation de la surface de dépôt (110) comprend un sablage de la surface de dépôt (110).

7. Procédé selon la revendication 1, dans lequel la préparation de la surface de dépôt (110) comprend une texturation de la surface de dépôt par un procédé de préparation de surface choisi parmi la gravure au laser, la gravure chimique et l'usinage électrochimique.

8. Procédé selon la revendication 1, dans lequel une bande d'une largeur comprise entre 1 mm et 10 mm à partir d'au moins un bord (330) de la surface de dépôt se distingue du reste de la surface de dépôt par une surface de la bande choisie parmi : non recouverte par le deuxième polymère et recouverte d'un ruban adhésif résistant aux hautes températures.

9. Un outillage (100) destiné à la dépose de fibres d'une préforme composite à matrice thermoplastique (200), ledit outillage comprenant une surface de dépôt (110) présentant une rugosité Ra d'au moins 6,3 micromètres et dans lequel au moins une partie de la surface de dépôt (110) est recouverte d'une fine couche (320) d'une épaisseur comprise entre 120 micromètres et 400 micromètres, constituée d'un polymère thermoplastique adhérant en tous points à ladite au moins une partie de la surface de dépôt (110), dans lequel une bande d'une largeur comprise entre 1 mm et 10 mm, partant d'au moins un bord (330) de la surface de dépôt, se distingue du reste de la surface de dépôt par le fait que la surface de cette bande est soit non recouverte par la couche mince, soit recouverte d'un ruban adhésif résistant aux hautes températures (335).

10. L'outillage selon la revendication 9, comprenant un dispositif de chauffage intégré configuré pour chauffer la surface de dépôt .
